# EUROPEAN PATENT APPLICATION

(11) **EP 4 772 395 A1**
(43) Date of publication of application: **08.07.2026**
(21) Application number: 24870374.6
(22) Date of filing: 04.09.2024
(51) Int. Cl.: B60N 2/90, B60N 2/26, F16F 15/04

(54) **SIDE COLLISION BUFFERING MECHANISM AND CHILD SAFETY SEAT**

(30) Priority: 27.09.2023 CN 202322648244 U
(71) Applicant: Max-Inf (Ningbo) Baby Product Co., Ltd., Ningbo City, Zhejiang Province 315000 (CN)
(72) Inventor: JI, Xuewei, Ningbo, Zhejiang 315000 (CN); LIU, Jianchun, Ningbo, Zhejiang 315000 (CN)
(74) Representative: Lorenz Seidler Gossel Part. mbB
(86) International application number: PCT/CN2024/116815
(87) International publication number: WO 2025/066828

(57) **Abstract**

A side impact buffering mechanism and a child safety seat including the same are provided. A locking portion on a buffer member can be inserted into an accommodating cavity on a base through an insertion port on the base, and then rotated to cause an elastic locking member in the accommodating cavity to engage with a locking groove on the locking portion, so that the buffer member is kept in a locked position relative to the base. As such, the reliability of connection between the buffer member and the base can be improved, and the buffer member does not easily fall off during use, and can be conveniently mounted. To remove and replace the buffer member, a user only needs to apply a force to the buffer member to rotate the buffer member and the locking portion, so that the locking portion causes the elastic locking member to deform, and the locking groove is gradually separated and misaligned from the elastic locking member; and then pull the buffer member outward to cause the locking portion to exit the accommodating cavity through the insertion port, thus removing the buffer member from the base. As such, the buffer member can be more conveniently removed.

## Description

### TECHNICAL FIELD

The present invention relates to the technical field of vehicle accessories, and specifically to a side impact buffering mechanism and a child safety seat including the same.

### BACKGROUND

Child safety seats are a type of seats specially designed for children of different weights (or ages) and installed in vehicles to effectively improve children's safety during driving. For example, in the case of emergency braking or forward collision of a vehicle, the child safety seat can reduce the impact force on the child and effectively prevent the body of the child from moving forward rapidly, thereby avoiding secondary collision.

In the prior art, a side impact buffering mechanism is mounted on a side of a child safety seat. When the side of the seat is impacted, the side impact buffering mechanism can provide a buffering and shock-absorbing effect, thereby further improving the safety of the child safety seat.

However, in the existing side impact buffering mechanisms, a buffer member is directly fixed to a base by elastic deformation of plastic, and then the base is mounted to a child safety seat. As a result, the buffer member is likely to fall off.

### SUMMARY

An objective of the present invention is to provide a side impact buffering mechanism and a child safety seat including the same, to improve the reliability of connection between the buffer member and the base, prevent the buffer member from falling off during use, and facilitate the mounting and removal of the buffer member.

According to a first aspect, the present invention provides a side impact buffering mechanism, including:
a base, provided with an accommodating cavity and an insertion port in communication with the accommodating cavity;
a buffer member, located on a side of the base where the insertion port is provided, where the buffer member is provided with a locking portion, the locking portion is configured to be inserted into the accommodating cavity through the insertion port, and the locking portion is provided with a locking groove; and
an elastic locking member, arranged in the accommodating cavity,
where the buffer member is configured to rotate to a locked position or an unlocked position relative to the base under an external force; when the buffer member is in the locked position, a part of the elastic locking member is embedded in the locking groove to lock the buffer member; and in a process of the buffer member rotating from the locked position to the unlocked position, the locking groove is gradually separated and misaligned from the elastic locking member, allowing the locking portion to exit the accommodating cavity through the insertion port.

In an optional embodiment, the elastic locking member includes an elastic member and a locking column, the locking column is located at a portion of the elastic member adjacent to the locking portion, and the elastic member is configured to cause the locking column to tend to move toward the locking portion,
where when the buffer member is in the locked position, the locking column is embedded in the locking groove, and when the buffer member is in the unlocked position, the locking column is separated and misaligned from the locking groove.

In an optional embodiment, the accommodating cavity includes a cavity body and a mounting hole in communication with the cavity body, the cavity body is opposite to and in communication with the insertion port in a thickness direction of the base, the mounting hole is located on a side of the cavity body, the elastic member is located in the mounting hole, a first end of the elastic member presses against a bottom of the mounting hole, and a second end of the elastic member presses against the locking column.

In an optional embodiment, the accommodating cavity further includes a limiting cavity in communication with the cavity body and the mounting hole, the limiting cavity is located between the cavity body and the mounting hole, the locking column is located in the limiting cavity, the locking column presses against an inner wall of the limiting cavity under action of the elastic member, and during a rotation of the buffer member, the locking column is configured to compress, under action of the locking portion, the elastic member to move toward the bottom of the mounting hole.

In an optional embodiment, a through hole is provided on a side of the base facing away from the buffer member, and the locking column is configured to be mounted in the accommodating cavity through the through hole.

In an optional embodiment, a cross-section of the locking groove is arc-shaped, and the locking column is a cylinder.

In an optional embodiment, the locking portion includes a connecting column and a locking plate, a first end of the connecting column is connected to the buffer member, the locking plate is connected to an end of the connecting column away from the buffer member, the connecting column is inserted into the insertion port, the locking plate is located in the accommodating cavity, and the locking groove is provided on a side surface of the locking plate.

In an optional embodiment, the locking plate is a waist-shaped plate, the locking groove is provided on an arc-shaped side surface of the locking plate, the insertion port is a waist-shaped hole, a length direction of the locking plate is consistent with a length direction of the insertion port when the buffer member is in the locked position, and the length direction of the locking plate is at an angle to the length direction of the insertion port when the buffer member is in the unlocked position.

In an optional embodiment, the base is provided with an engagement groove, the insertion port is formed through a bottom of the engagement groove, the buffer member is provided with an engagement protrusion, the engagement protrusion is provided with the locking portion, and the engagement protrusion is configured to engage with the engagement groove.

According to a second aspect, the present invention provides a child safety seat, including a seat body, and the side impact buffering mechanism according to any one of the above embodiments, where the side impact buffering mechanism is arranged on a side surface of the seat body.

The embodiments of the present invention have the following advantages.

The locking portion on the buffer member can be inserted into the accommodating cavity on the base through the insertion port on the base, and then rotated to cause the elastic locking member in the accommodating cavity to engage with the locking groove on the locking portion, so that the buffer member is kept in the locked position relative to the base. As such, the reliability of connection between the buffer member and the base can be improved, and the buffer member does not easily fall off during use, and can be conveniently mounted. To remove and replace the buffer member, a user only needs to apply a force to the buffer member to rotate the buffer member and the locking portion, so that the locking portion causes the elastic locking member to deform, and the locking groove is gradually separated and misaligned from the elastic locking member; and then pull the buffer member outward to cause the locking portion to exit the accommodating cavity through the insertion port, thus removing the buffer member from the base. As such, the buffer member can be more conveniently removed.

### BRIEF DESCRIPTION OF THE DRAWINGS

To describe the technical solutions of specific embodiments of the present invention or the related art more clearly, the following briefly introduces the accompanying drawings required for describing the specific embodiments or the related art. Apparently, the accompanying drawings in the following description show only some embodiments of the present invention, and those having ordinary skills in the art may still derive other drawings from these accompanying drawings without creative efforts.
FIG. 1 is a schematic diagram of a side impact buffering mechanism.
FIG. 2 is a schematic exploded view of the side impact buffering mechanism shown in FIG. 1.
FIG. 3 is a cross-sectional view of the side impact buffering mechanism when the buffer member is in an unlocked position.
FIG. 4 is a cross-sectional view of the side impact buffering mechanism when the buffer member is in a locked position.
FIG. 5 is a schematic structural diagram of the base in combination with the elastic locking member.
FIG. 6 is a structural cross-sectional view the base in combination with the elastic locking member.
FIG. 7 is a schematic diagram of the buffer member.
FIG. 8 is a cross-sectional view of the buffer member.
FIG. 9 is a schematic diagram showing a movement range of the locking column.
FIG. 10 is a schematic diagram of the side impact buffering mechanism when the buffer member is in the unlocked position.
FIG. 11 is a schematic diagram of the side impact buffering mechanism when the buffer member rotates from the unlocked position toward the locked position.
FIG. 12 is a schematic diagram of the side impact buffering mechanism when the buffer member is in the locked position.

In the drawings, the reference numerals respectively represent: 10 - base; 11 - insertion port; 12 - accommodating cavity; 120 - cavity body; 121 - limiting cavity; 122 - mounting hole; 13 - engagement groove; 14 - through hole; 20 - buffer member; 21 - locking portion; 210 - connecting column; 211 - locking plate; 212 - locking groove; 22 - engagement protrusion; 30 - elastic member; 40 - locking column.

### DETAILED DESCRIPTION OF THE EMBODIMENTS

To make the objectives, technical solutions and advantages of the embodiments of the present invention clearer, the technical solutions in the embodiments of the present invention will be described clearly and thoroughly with reference to the accompanying drawings in the embodiments of the present invention. Apparently, the embodiments described are merely some embodiments, rather than all of the embodiments of the present invention. The components of the embodiments of the present invention described and illustrated in the accompanying drawings herein may generally be arranged and designed in a variety of different configurations.

Therefore, the following detailed description of the embodiments of the present invention provided in the accompanying drawings is not intended to limit the scope of the present invention, but merely represents selected embodiments of the present invention. All other embodiments obtained by those having ordinary skills in the art without creative efforts based on the embodiments of the present invention shall fall within the protection scope of the present invention.

It should be noted that like numerals and letters denote like terms in the following drawings. Therefore, once an item is defined in one accompanying drawing, the item does not need to be further defined and explained in the subsequent accompanying drawings.

In the description of the embodiments of the present invention, it should be noted that the orientation or positional relationships indicated by the terms such as "center", "up", "down", "left", "right", "vertical", "horizontal", "inner", "outer", etc. are based on the orientation or positional relationships shown in the drawings or the usual orientation or positional relationships of the product of the present invention during use, and are only for the convenience of describing the embodiments of the present invention and simplifying the description, rather than indicating or implying that the apparatus or element described must have a specific orientation or be constructed and operated in a specific orientation, and therefore are not to be construed as limiting the present invention. In addition, the terms such as "first", "second", and "third" are merely used to distinguish the described objects, and are not intended to indicate or imply relative importance.

Further, the terms such as "horizontal", "vertical", and "suspended" do not mean that the component must be absolutely horizontal or suspended, but may be slightly inclined. For example, "horizontal" merely refers to a direction that is more horizontal than "vertical", and does not mean that the structure must be completely horizontal, but the structure may be slightly inclined.

In the description of the present invention, it should also be noted that, unless otherwise clearly specified and defined, the terms such as "arrange", "mount", "connect", "couple", and variants thereof should be interpreted in a broad sense, for example, may be a fixed connection, a detachable connection, or an integral connection; may be a mechanical connection or an electrical connection; or may be a direct connection, an indirect connection via an intermediate medium, or communication between the interiors of two components. For those having ordinary skills in the art, the specific meanings of the above terms in the present invention can be understood according to specific circumstances.

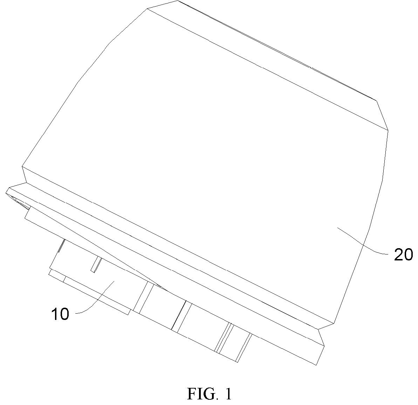

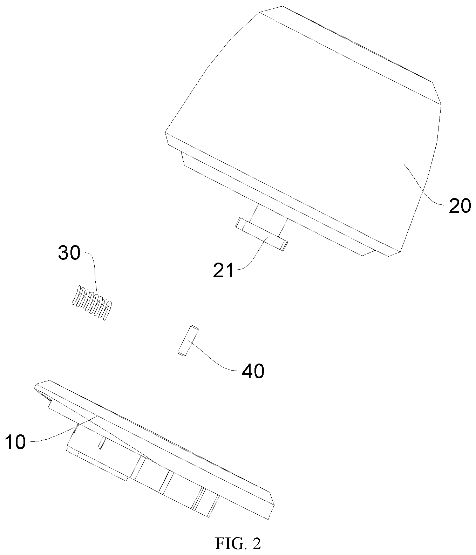

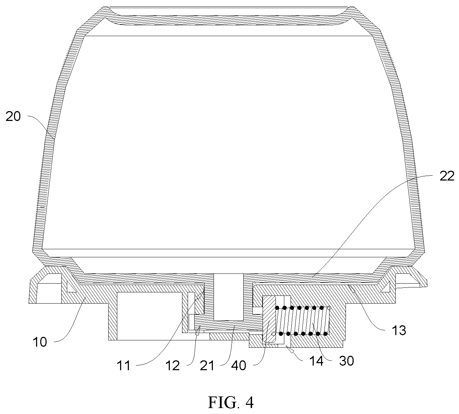

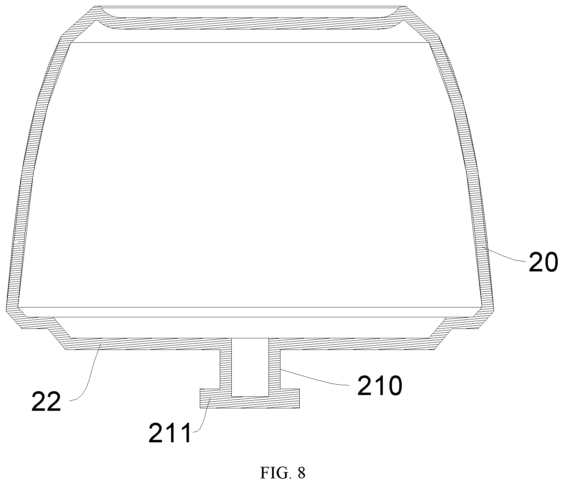

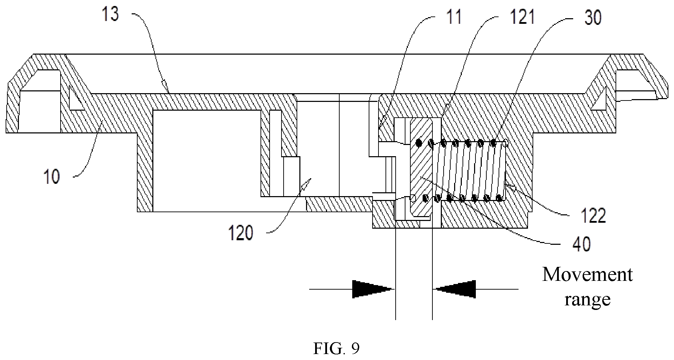

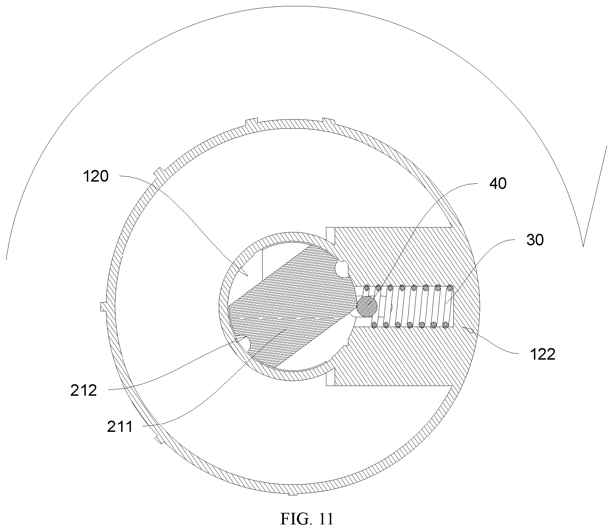

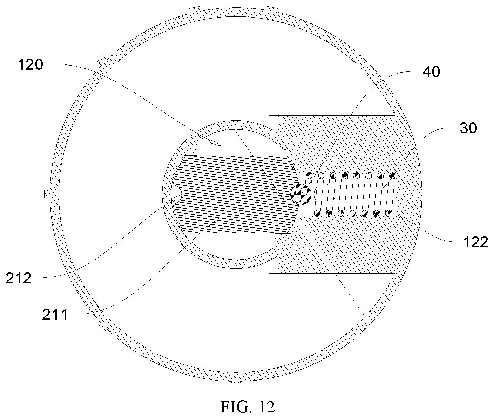

Some embodiments of the present invention will be described in detail below with reference to FIG. 1 to FIG. 12. The following embodiments and the features in the embodiments may be combined with each other without conflict.

Embodiments of the present invention disclose a child safety seat, which includes a seat body and a side impact buffering mechanism. The seat body is mainly configured for a child occupant to sit on. The seat body includes a seat base and a seat back connected to the seat base. The seat back includes two side wings. When the child safety seat is mounted in a vehicle, a side wing is adjacent to a door of the vehicle. A side impact buffering mechanism is provided on a surface of the side wing adjacent to the door, i.e., the side impact buffering mechanisms are arranged on side surfaces of the seat body, to reduce the impact of collisions between the side wings and the door, thereby protecting the child occupant.

Referring to FIG. 1 to FIG. 4, the side impact buffering mechanism includes a base 10, a buffer member 20, and an elastic locking member. The base 10 is mainly configured to be fixedly mounted to the seat body. The base 10 is provided with an accommodating cavity 12 and an insertion port 11 in communication with the accommodating cavity 12. The insertion port 11 is specifically provided on a surface of the base 10 in a thickness direction of the base 10. The buffer member 20 is mainly made of plastic or other materials with good elasticity to contact with an inner wall of the vehicle to provide a buffering effect, and is located on a side of the base 10 where the insertion port 11 is provided. The buffer member 20 is provided with a locking portion 21. The locking portion 21 is configured to be inserted into the accommodating cavity 12 through the insertion port 11. The locking portion 21 is provided with a locking groove 212. The elastic locking member is arranged in the accommodating cavity 12. The buffer member 20 is configured to rotate to a locked position or an unlocked position relative to the base 10 under an external force. When the buffer member 20 is in the locked position, a part of the elastic locking member is embedded in the locking groove 212 to lock the buffer member 20. In a process of the buffer member 20 rotating from the locked position to the unlocked position, the locking groove 212 is gradually separated and misaligned from the elastic locking member, allowing the locking portion 21 to exit the accommodating cavity 12 through the insertion port 11.

Based on the above, in this embodiment, the locking portion 21 on the buffer member 20 can be inserted into the accommodating cavity 12 on the base 10 through the insertion port 11 on the base 10, and then rotated to cause the elastic locking member in the accommodating cavity 12 to engage with the locking groove 212 on the locking portion 21, so that the buffer member 20 is kept in the locked position relative to the base 10. As such, the reliability of connection between the buffer member 20 and the base 10 can be improved, and the buffer member 20 does not easily fall off during use, and can be conveniently mounted. To remove and replace the buffer member 20, a user only needs to apply a force to the buffer member 20 to rotate the buffer member 20 and the locking portion 21, so that the locking portion 21 causes the elastic locking member to deform, and the locking groove 212 is gradually separated and misaligned from the elastic locking member; and then pull the buffer member 20 outward to cause the locking portion 21 to exit the accommodating cavity 12 through the insertion port 11, thus removing the buffer member 20 from the base 10. As such, the buffer member 20 can be more conveniently removed.

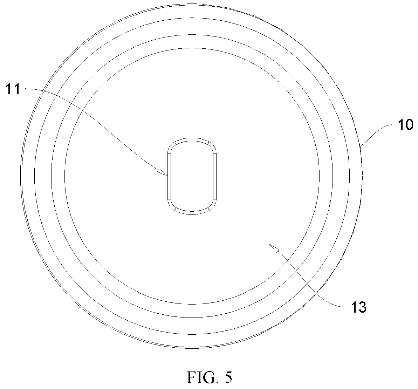

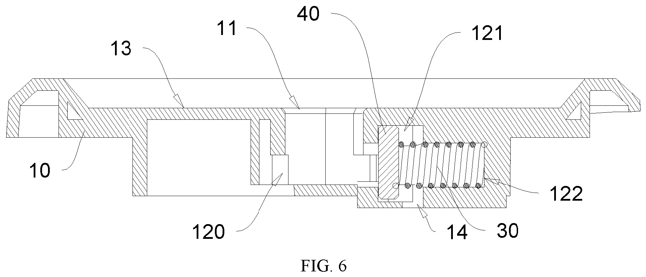

Referring to FIG. 5 and FIG. 6, in this embodiment, the base 10 is substantially of a circular block structure, the insertion port 11 is located in a central area of the base 10, the buffer member 20 is of a hollow truncated cone structure, and the locking portion 21 is located in a central area of an end surface with a larger diameter of the buffer member 20. As such, the base 10 and the buffer member 20 are substantially coaxially fitted, making the overall appearance of the side impact buffering mechanism more regular and more aesthetic. In addition, because the buffer member 20 adopts a hollow truncated cone structure, the buffer member 20 provides a better hand feel and a better buffering effect and does not easily wear, thereby improving user experience.

The base 10 is provided with an engagement groove 13. The insertion port 11 is formed through a bottom of the engagement groove 13. The buffer member 20 is provided with an engagement protrusion 22. The engagement protrusion 22 is provided with the locking portion 21. The engagement protrusion 22 is configured to engage with the engagement groove 13. As such, the tightness and reliability of connection between the base 10 and the buffer member 20 can be further improved.

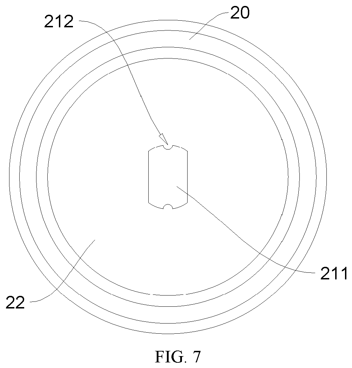

Referring to FIG. 7 to FIG. 9, the locking portion 21 includes a connecting column 210 and a locking plate 211. A first end of the connecting column 210 is connected to the buffer member 20. Specifically, the connecting column 210 is of a hollow structure, a first end of the connecting column 210 is connected to a central area of the engagement protrusion 22, and an inner cavity of the connecting column 210 is in communication with an inner cavity of the buffer member 20. The locking plate 211 is connected to an end of the connecting column 210 away from the buffer member 20. The connecting column 210 is inserted into the insertion port 11. The locking plate 211 is located in the accommodating cavity 12. The locking groove 212 is provided on a side surface of the locking plate 211. As such, the contact of the locking plate 211 with an inner wall of the accommodating cavity 12 and the contact of the buffer member 20 with the base 10 can restrict the buffer member 20 from moving relative to the base 10 in the thickness direction, thereby ensuring a more reliable connection between the buffer member 20 and the base 10.

The locking plate 211 is a waist-shaped plate. The locking groove 212 is provided on an arc-shaped side surface of the locking plate 211. The insertion port 11 is a waist-shaped hole. When the buffer member 20 is in the locked position, a length direction of the locking plate 211 is consistent with a length direction of the insertion port 11, making it convenient to for the locking plate 211 to enter or exit the accommodating cavity 12 through the insertion port 11. When the buffer member 20 is in the unlocked position, the length direction of the locking plate 211 is at an angle to the length direction of the insertion port 11, and the locking plate 211 presses against the inner wall of the accommodating cavity 12, thereby restricting the buffer member 20 from moving in the thickness direction of the base 10.

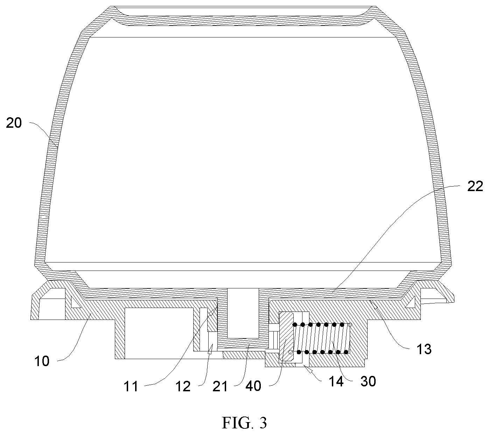

Referring to FIG. 3, FIG. 4, FIG. 6, and FIG. 9, in this embodiment, the elastic locking member includes an elastic member 30 and a locking column 40. The locking column 40 is located at a portion of the elastic member 30 adjacent to the locking portion 21. The elastic member 30 is configured to cause the locking column 40 to tend to move toward the locking portion 21. When the buffer member 20 is in the locked position, the locking column 40 is embedded in the locking groove 212. When the buffer member 20 is in the unlocked position, the locking column 40 is separated and misaligned from the locking groove 212.

The accommodating cavity 12 includes a cavity body 120 and a mounting hole 122 in communication with the cavity body 120. The cavity body 120 is opposite to and in communication with the insertion port 11 in the thickness direction of the base 10. The mounting hole 122 is located on a side of the cavity body 120. The elastic member 30 is located in the mounting hole 122. A first end of the elastic member 30 presses against a bottom of the mounting hole 122, and a second end of the elastic member 30 presses against the locking column 40. Thus, the mounting of the elastic locking member can be realized.

The accommodating cavity 12 further includes a limiting cavity 121 in communication with the cavity body 120 and the mounting hole 122. The limiting cavity 121 is located between the cavity body 120 and the mounting hole 122. The locking column 40 is located in the limiting cavity 121. The locking column 40 presses against an inner wall of the limiting cavity 121 under action of the elastic member 30. During a rotation of the buffer member 20, the locking column 40 is configured to compress, under action of the locking portion 21, the elastic member 30 to move toward the bottom of the mounting hole 122. As such, a movement range of the locking column 40 can be limited by the limiting cavity 121, to prevent the locking column 40 from detaching from the elastic member 30 due to excessive movement of the locking column 40 under the action of the elastic member 30 after the locking column 40 is separated and misaligned from the locking groove 212.

The base 10 is provided with a through hole 14 on a side thereof facing away from the buffer member 20. The through hole 14 is in communication with the limiting cavity 121 of the accommodating cavity 12, so that the locking column 40 can be mounted in the accommodating cavity 12 through the through hole 14. This makes it convenient to accurately mount the locking column 40 to a determined position in the accommodating cavity 12, thereby improving the mounting efficiency.

A cross-section of the locking groove 212 is arc-shaped, and the locking column 40 is a cylinder. Such a configuration is conducive to the fitting between the locking groove 212 and the locking column 40, and requires a large force to separate the locking column 40 from the locking groove 212 when the buffer member 20 rotates. Therefore, the arc surface fitting between the locking groove 212 and the locking column 40 can enhance the bonding between the locking groove 212 and the locking column 40 and ensure the stability and reliability of the side impact buffering mechanism.

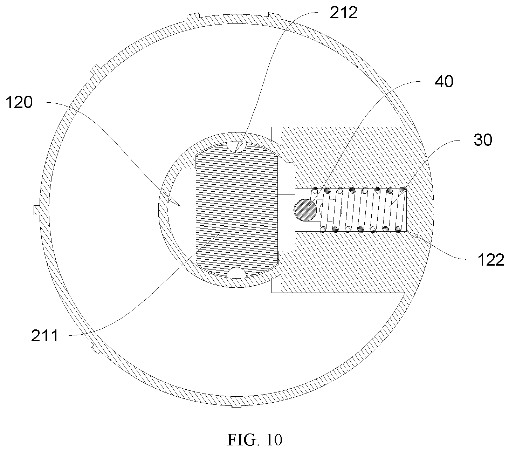

Referring to FIG. 10 to FIG. 12, to assemble the side impact buffering mechanism of this embodiment, the elastic member 30 is first mounted into the mounting hole 122 of the accommodating cavity 12 on the base 10, and then the locking column 40 is passed through the through hole 14 into the limiting cavity 121 of the accommodating cavity 12, so that the elastic member 30 presses against the bottom of the mounting hole 122 and a peripheral wall of the locking column 40. As the elastic member 30 is compressed, the locking column 40 tends to move away from the bottom of the mounting hole 122, and therefore presses against the inner wall of the limiting cavity 121. Thus, the mounting of the elastic locking member is completed.

Then, the side of the buffer member 20 with the locking portion 21 is aligned with the side of the base 10 with the insertion port 11, so that the length direction of the insertion port 11 is consistent with the length direction of the locking plate 211. Then, the base 10 and the buffer member 20 are moved toward each other, so that the engagement protrusion 22 is engaged with the engagement groove 13 to limit the positions of the buffer member 20 and the base 10. Meanwhile, the locking plate 211 and the connecting column 210 are passed through the insertion port 11 into the cavity body 120 of the accommodating cavity 12. In this case, the buffer member 20 is in the unlocked position relative to the base 10. Then, an external force is applied to rotate the buffer member 20 clockwise, so that the arc-shaped side surface of the locking plate 211 will enter into contact with and gradually squeeze the locking column 40, causing the locking column 40 to move toward the bottom of the mounting hole 122 to compress the elastic member 30. When the locking groove 212 moves to a position corresponding to the locking column 40, the locking column 40 moves toward the locking plate 211 under an elastic force of the elastic member 30, so that the locking column 40 is embedded in the locking groove 212. After the external force applied to the buffer member 20 is released, the buffer member 20 can be kept in the locked position relative to the base 10. Thus, the assembly of the side impact buffering mechanism is completed.

To remove the buffer member 20 from the base 10, a user only needs to apply a force to rotate the buffer member 20 counterclockwise, so that the locking groove 212 gradually moves away from the locking column 40, causing the locking column 40 to compress the elastic member 30 and move toward the bottom of the mounting hole 122 until the buffer member 20 rotates to a position where the arc-shaped side surface of the locking plate 211 is separated from the locking column 40. In this case, the elastic member 30 is not squeezed by the locking plate 211 and therefore moves toward the locking plate 211 under the action of the elastic member 30 to press against the inner wall of the limiting cavity 121. Then, the user continues to rotate the buffer member 20 until the length direction of the locking plate 211 is consistent with the length direction of the insertion port 11, and then directly pulls the buffer member 20 outward to cause the locking portion 21 to exit through the insertion port 11. Thus, the removal of the buffer member 20 is completed.

Based on the above, this embodiment discloses a side impact buffering mechanism and a child safety seat including the same. The locking portion 21 on the buffer member 20 can be inserted into the accommodating cavity 12 on the base 10 through the insertion port 11 on the base 10, and then rotated to cause the elastic locking member in the accommodating cavity 12 to engage with the locking groove 212 on the locking portion 21, so that the buffer member 20 is kept in the locked position relative to the base 10. As such, the reliability of connection between the buffer member 20 and the base 10 can be improved, and the buffer member 20 does not easily fall off during use, and can be conveniently mounted. To remove and replace the buffer member 20, a user only needs to apply a force to the buffer member 20 to rotate the buffer member 20 and the locking portion 21, so that the locking portion 21 causes the elastic locking member to deform, and the locking groove 212 is gradually separated and misaligned from the elastic locking member; and then pull the buffer member 20 outward to cause the locking portion 21 to exit the accommodating cavity 12 through the insertion port 11, thus removing the buffer member 20 from the base 10. As such, the buffer member 20 can be more conveniently removed.

Finally, it should be noted that, the foregoing embodiments are merely used for describing the technical solutions of the present invention, but are not intended to limit the present invention. It should be understood by those having ordinary skills in the art that although the present invention has been described in detail with reference to the foregoing embodiments, modifications can be made to the technical solutions described in the foregoing embodiments, or equivalent replacements can be made to some or all of the technical features in the technical solutions, as long as such modifications or replacements do not cause the essence of corresponding technical solutions to depart from the scope of the technical solutions of the embodiments of the present invention.

## Claims

1. A side impact buffering mechanism, **characterized by** comprising:
a base, provided with an accommodating cavity and an insertion port in communication with the accommodating cavity;
a buffer member, located on a side of the base where the insertion port is provided, wherein the buffer member is provided with a locking portion, the locking portion is configured to be inserted into the accommodating cavity through the insertion port, and the locking portion is provided with a locking groove; and
an elastic locking member, arranged in the accommodating cavity,
wherein the buffer member is configured to rotate to a locked position or an unlocked position relative to the base under an external force; when the buffer member is in the locked position, a part of the elastic locking member is embedded in the locking groove to lock the buffer member; and in a process of the buffer member rotating from the locked position to the unlocked position, the locking groove is gradually separated and misaligned from the elastic locking member, allowing the locking portion to exit the accommodating cavity through the insertion port.

2. The side impact buffering mechanism according to claim 1, **characterized in that** the elastic locking member comprises an elastic member and a locking column, the locking column is located at a portion of the elastic member adjacent to the locking portion, and the elastic member is configured to cause the locking column to tend to move toward the locking portion,
wherein when the buffer member is in the locked position, the locking column is embedded in the locking groove, and when the buffer member is in the unlocked position, the locking column is separated and misaligned from the locking groove.

3. The side impact buffering mechanism according to claim 2, **characterized in that** the accommodating cavity comprises a cavity body and a mounting hole in communication with the cavity body, the cavity body is opposite to and in communication with the insertion port in a thickness direction of the base, the mounting hole is located on a side of the cavity body, the elastic member is located in the mounting hole, a first end of the elastic member presses against a bottom of the mounting hole, and a second end of the elastic member presses against the locking column.

4. The side impact buffering mechanism according to claim 3, **characterized in that** the accommodating cavity further comprises a limiting cavity in communication with the cavity body and the mounting hole, the limiting cavity is located between the cavity body and the mounting hole, the locking column is located in the limiting cavity, the locking column presses against an inner wall of the limiting cavity under action of the elastic member, and during a rotation of the buffer member, the locking column is configured to compress, under action of the locking portion, the elastic member to move toward the bottom of the mounting hole.

5. The side impact buffering mechanism according to claim 2, **characterized in that** a through hole is provided on a side of the base facing away from the buffer member, and the locking column is configured to be mounted in the accommodating cavity through the through hole.

6. The side impact buffering mechanism according to claim 2, **characterized in that** a cross-section of the locking groove is arc-shaped, and the locking column is a cylinder.

7. The side impact buffering mechanism according to claim 1, **characterized in that** the locking portion comprises a connecting column and a locking plate, a first end of the connecting column is connected to the buffer member, the locking plate is connected to an end of the connecting column away from the buffer member, the connecting column is inserted into the insertion port, the locking plate is located in the accommodating cavity, and the locking groove is provided on a side surface of the locking plate.

8. The side impact buffering mechanism according to claim 7, **characterized in that** the locking plate is a waist-shaped plate, the locking groove is provided on an arc-shaped side surface of the locking plate, the insertion port is a waist-shaped hole, a length direction of the locking plate is consistent with a length direction of the insertion port when the buffer member is in the locked position, and the length direction of the locking plate is at an angle to the length direction of the insertion port when the buffer member is in the unlocked position.

9. The side impact buffering mechanism according to claim 1, **characterized in that** the base is provided with an engagement groove, the insertion port is formed through a bottom of the engagement groove, the buffer member is provided with an engagement protrusion, the engagement protrusion is provided with the locking portion, and the engagement protrusion is configured to engage with the engagement groove.

10. A child safety seat, **characterized by** comprising a seat body and the side impact buffering mechanism according to any one of claims 1 to 9, wherein the side impact buffering mechanism is arranged on a side surface of the seat body.
